## Europäisches Patentamt

## European Patent Office

## Office européen des brevets

(19)

(11) Numéro de publication: **0 022 007**

**A1**

(12)

# DEMANDE DE BREVET EUROPEEN

(21) Numéro de dépôt: **80400923.1**

(22) Date de dépôt: **20.06.80**

(51) Int. Cl.³: **F 16 G 3/16**
**B 27 F 7/19**

(30) Priorité: **21.06.79 FR 7915903**

(43) Date de publication de la demande:
**07.01.81 Bulletin 81/1**

(84) Etats Contractants Désignés:
**DE FR GB**

(71) Demandeur: **Société GORO**
**Avenue de Sylvie**
**F-77500 Chelles(FR)**

(72) Inventeur: **Schick, Jean-François**
**75, rue de l'Assomption**
**F-75016 Paris(FR)**

(74) Mandataire: **Tony-Durand, Serge**
**Cabinet Tony-Durand 22, Boulevard Voltaire**
**F-75011 Paris(FR)**

(54) **Machine pour la coupe d'un tapis transporteur et la pose d'une rangée d'agrafes de jonction sur le bord d'un tel tapis.**

(57) Cette machine comporte une tête de travail (6) mobile sur toute sa largeur, pour assurer l'enfoncement des crampons de fixation (14) des agrafes (11) au moyen d'un poinçon d'enfoncement (12) et d'une enclume (13), situés de part et d'autre de l'emplacement du tapis. Cependant, une lame de coupe (19) est fixée sur l'outil mobile de cette machine ou sur l'un des deux outils mobiles de celle-ci, par exemple le support (21) de l'enclume (13), lorsque celle-ci est mobile. Une contre-lame fixe (26) est prévue en regard, l'agencement étant tel que la tête de travail (6) de cette machine soit ainsi capable de couper la bande transporteuse (T) par une série d'opérations de coupe effectuées avant la pose des agrafes (11) et ce, en utilisant le même mécanisme de commande que celui assurant ensuite cette seconde opération.

La présente machine peut être utilisée pour assurer les deux opérations nécessaires après détérioration de l'une des jonctions d'un tapis transporteur (T), c'est-à-dire la coupe de l'extrémité correspondante de celui-ci, puis la pose d'une rangée d'agrafes de jonction (11).

1

"Machine pour la coupe d'un tapis transporteur et la pose
d'une rangée d'agrafes de jonction sur le bord d'un tel
tapis"

La présente invention concerne la jonction de tapis transporteurs de convoyeurs utilisés pour le transport de matériaux en vrac et notamment de charbon dans les mines.

Cette jonction est assurée en fixant, sur l'un et l'autre des deux bords à réunir, deux rangées d'agrafes complémentaires de jonction qui sont ensuite accouplées au moyen d'un axe flexible d'articulation. La pose de chaque rangée d'agrafes de jonction est réalisée au moyen de machines spécialement conçues à cet effet et qui sont aptes à assurer l'enfoncement des crampons ou autres organes de fixation des agrafes.

En général, ces machines comportent une tête de travail capable d'enfoncer les crampons ou autres organes de fixation d'un nombre restreint d'agrafes, par exemple une ou deux, cette tête étant montée mobile sur toute la largeur de la machine pour pouvoir assurer successivement l'enfoncement des crampons ou autres organes de fixation de la totalité des agrafes d'une même rangée. A cet effet, cette tête de travail comprend, de part et d'autre de l'emplacement réservé au bord du tapis transporteur, un poinçon d'enfoncement des crampons et une enclume apte à assurer le recourbement des pointes de ces derniers, après passage à travers les deux branches d'une agrafe ainsi qu'à travers le bord du tapis placé entre celles-ci. Dans certaines de ces machines, seul le poinçon d'enfoncement est mobile, perpendiculairement au tapis transporteur, cependant que dans d'autres, les outils de travail sont tous deux mobiles en sens inverse.

Bien entendu, en cas de réparation de l'une des jonctions d'un tapis transporteur, il convient de couper, de façon franche et régulière, l'extrémité du tapis avant de poser une nouvelle rangée d'agrafes de jonction. Actuellement, cette opération préalable est réalisée au moyen d'un organe tranchant manoeuvré à la main.

Cependant, l'augmentation de la résistance de l'armature interne des tapis transporteurs, en textile ou câble métallique, pose des problèmes d'ordre pratique pour l'exécution de cette opération. En effet, celle-ci requiert un effort physique de plus en plus important. Par ailleurs, il existe de graves risques d'accidents, surtout lorsqu'il s'agit d'une opération de coupe effectuée au fond d'une galerie de mine.

C'est pourquoi la présente invention a pour but de faciliter la réparation de la jonction d'un tapis transporteur en remplaçant l'opération manuelle de coupe par une opération exécutée de façon mécanique. Toutefois, comme il/ne serait pas rentable de réaliser une machine servant uniquement à la coupe préalable de l'extrémité d'un tapis transporteur, la présente invention a pour objet une machine conçue à deux usages, en l'occurrence une machine de pose d'agrafes de jonction qui peut également servir à l'opération préalable de coupe d'un tapis transporteur.

Cette machine s'apparente aux machines de pose d'agrafes de jonction du type rappelé précédemment, car elle comporte également une tête de travail, mobile sur toute la largeur de cette machine, pour assurer l'enfoncement des crampons de fixation des agrafes au moyen d'un poinçon d'enfoncement et d'une enclume, situés de part et d'autre de l'emplacement du tapis, le premier au moins de ces deux outils de travail étant susceptible d'être déplacé, perpendiculairement au tapis transporteur, sous l'effet d'un mécanisme de commande.

Cependant, la machine selon l'invention présente pour caractéristique originale le fait de comporter un organe de coupe fixé sur l'outil mobile de cette machine, ou sur l'un des deux outils mobiles de celle-ci, et une contre-lame fixe prévue en regard, l'agencement étant tel que la tête de travail de cette machine soit ainsi capable de couper la bande transporteuse par une série d'opérations de coupe effectuées avant la pose des agrafes et ce, en utilisant le même mécanisme de commande.

Ainsi, cette machine permet d'éviter d'avoir à réaliser à la main l'opération préalable de coupe de l'extrémité d'un tapis transporteur. Ceci supprime donc tous les inconvénients d'une telle opération.

Deux exemples de réalisation de la présente machine sont décrits ci-dessous en référence au dessin annexé à simple titre indicatif et sur lequel :

La figure 1 est une vue schématique en perspective d'une machine selon l'invention ;

La figure 2 est une vue partielle en perspective, à échelle différente, représentant la tête de travail de cette machine ;

La figure 3 est une vue en coupe selon la ligne III-III de la figure 2 ;

La figure 4 est une vue en perspective d'un détail d'exécution prévu dans une variante de réalisation ;

La figure 5 est une vue partielle en coupe transversale d'une autre forme de réalisation de la machine selon l'invention ;

La figure 6 est une vue partielle en coupe selon la ligne VI-VI de la figure 5.

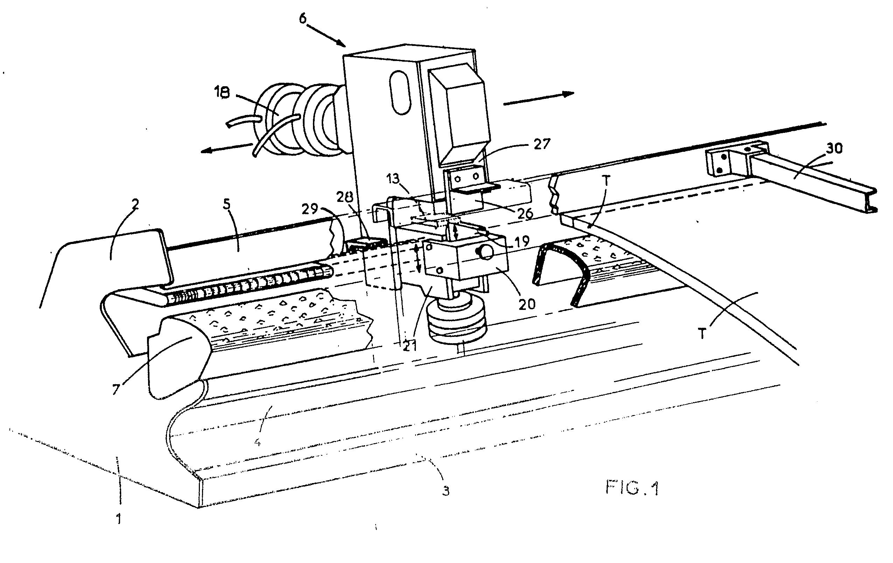

La présente machine possède un bâti 1 comportant deux flasques latéraux d'extrémité 2 dont un seul est représenté sur la figure 1. Ces deux flasques sont réunis par des longerons 3 ainsi que par deux rails 4 et 5 sur lesquels est montée coulissante une tête de travail désignée par la référence générale 6. Entre les deux flasques d'extrémité 2, il est également prévu deux mâchoires de serrage 7 et 8 dont l'une est fixe et l'autre mobile, destinées à assurer l'immobilisation du tapis transporteur T dans cette machine.

En regard de l'emplacement réservé à ce tapis, il est prévu, une série de charnons 9 formant un peigne destiné à recevoir les charnons 10 d'une rangée d'agrafes de jonction 11 devant être fixées sur le bord d'un tel tapis.

De part et d'autre de l'emplacement réservé à ce tapis, la tête de travail comporte un poinçon 12 d'enfoncement des crampons de fixation des agrafes à fixer en place et une enclume 13 destinée à assurer le rabattement des pointes des crampons 14, après traversée des deux branches 15 et 16 de l'agrafe correspondante ainsi que du bord du tapis placé entre celles-ci. Du reste, cette tête de travail peut être du type de celle décrite dans le certificat d'addition déposé en France par la Demanderesse le 28 Janvier 1977 sous le N° 77 02449 et publiée sous le N° 2 378 615. En conséquence, le poinçon 12 et l'enclume 13 sont susceptibles d'être déplacés perpendiculairement aux deux faces du tapis T, mais en sens inverse. A cet effet, il est prévu des moyens mécaniques de commande susceptibles d'assurer successivement :

a - la fermeture de deux pinces 17 de guidage des crampons 14 à enfoncer, cette fermeture étant commandée par l'intermédiaire d'un mouvement partiel de descente du poinçon 12 ;

b - la montée de l'enclume 13 pour assurer le rabattement de la branche inférieure 16 des agrafes à fixer en place et ce, contre la face inférieure du tapis T ;

c - la poursuite de la descente du poinçon 12 pour assurer l'enfoncement des crampons 14 à travers le tapis, puis à travers les trous prévus dans la branche inférieure 16 des agrafes ;

d - enfin, un mouvement final de relèvement de l'enclume 13 pendant l'achèvement de la descente du poinçon d'enfoncement 12 afin de provoquer le rabattement des pointes des crampons 14 contre la face externe de la branche inférieure des agrafes.

Les moyens de commande ainsi prévus peuvent être actionnés manuellement à l'aide d'un levier. Cependant, ils peuvent également être commandés par un vérin pneumatique 18. Le piston de celui-ci peut alors agir d'une part sur le poinçon d'enfoncement 12 et d'autre part, sur le support mobile de l'enclume 13 par l'intermédiaire d'un système de cames conçues pour obtenir la succession des mouvements décrits ci-dessus.

Conformément à la caractéristique essentielle de l'objet de l'invention, la présente tête de travail comporte en outre, une lame de coupe 19 fixée sur un support 20, lui-même rapporté sur le support mobile 21 de l'enclume 13. A ce sujet, il convient de noter que cette lame est engagée dans un couloir 22 du support 20, à l'intérieur duquel elle peut être escamotée en position de non utilisation. Cependant, lors de son utilisation, cette lame est par contre fixée en position saillante au moyen d'une vis 23 à tête moletée dont l'extrémité est vissée dans un trou taraudé 24 de cette lame, laquelle comporte un second trou similaire 25 destiné à recevoir l'extrémité de la vis 23 lorsque cette lame est amenée en position d'effacement.

Il convient de noter qu'en position de travail, la lame 19

BAD ORIGINAL

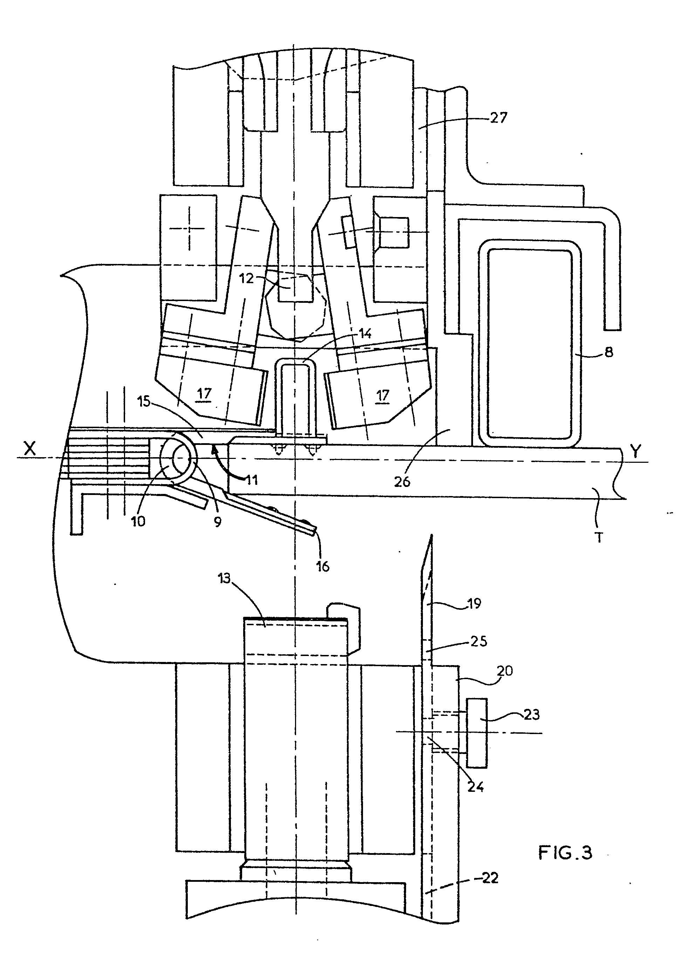

ces agrafes comme représenté à la figure 3 pour procéder à l'opération habituelle de fixation de celles-ci par enfoncement des crampons 14. Cependant, lors de cette opération, la lame de coupe 19 est maintenue en position d'effacement par escamotage à l'intérieur du couloir 22 mentionné précédemment.

La présente machine peut donc servir à deux usages, un même mécanisme de commande assurant l'une et l'autre des deux opérations prévues. Bien entendu, le principal avantage de cette machine réside dans le fait qu'elle permet d'éviter d'avoir à pratiquer à la main, l'opération de coupe de l'extrémité d'un tapis transporteur, après détérioration de l'une des jonctions de celui-ci. Ceci évite donc tous les inconvénients d'une telle opération, ainsi que les risques extrêmement graves existant lors de l'exécution d'une telle opération dans certaines conditions précaires, notamment au fond d'une galerie de mine. Par ailleurs, la présente machine permet de couper très facilement des tapis transporteurs de grande résistance pour lesquels une coupe à la main était très difficile.

Dans une forme de réalisation perfectionnée de la présente machine, le mécanisme d'avancement à cliquet 28 peut être remplacé par une commande automatique pas-à-pas, par exemple un mécanisme de commande actionné au moyen d'un vérin pneumatique. Ce mécanisme d'avancement peut alors être utilisé non seulement pendant les opérations de coupe du tapis sur toute sa largeur, mais également pendant les opérations ultérieures de fixation des agrafes de jonction.

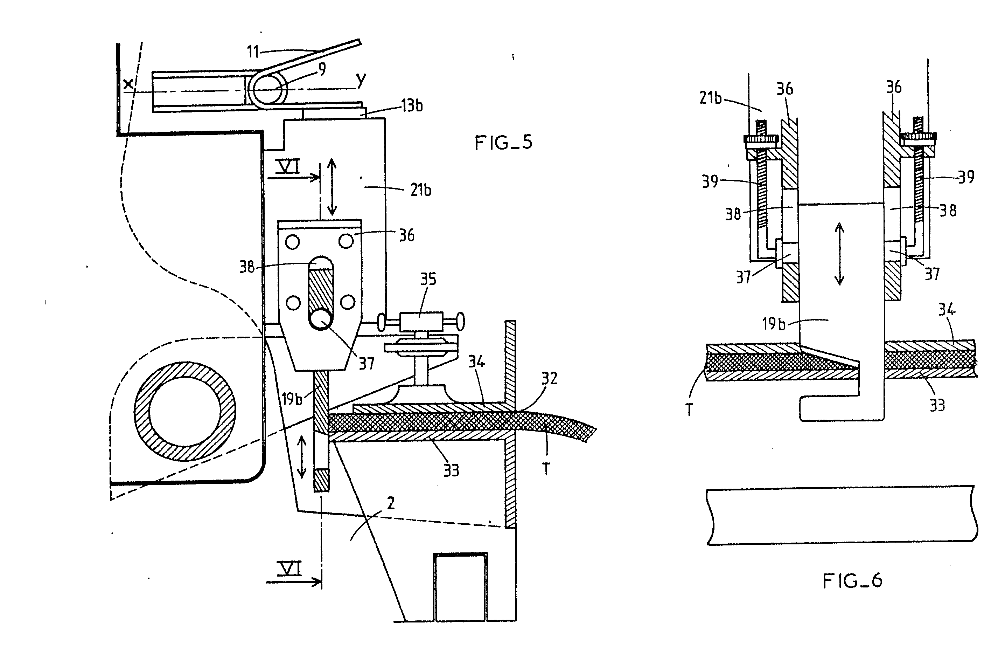

Par ailleurs, la lame 19 peut être remplacée par tout autre organe de coupe approprié. Ainsi, comme représenté à la figure 4, cette lame peut être remplacée par une molette tranchante 31, montée de façon escamotable sur le support 20a, analogue au support 20 et pouvant également être fixé sur le support mobile 21 de l'enclume 13.

Du reste, il va de soi que la machine selon l'invention n'est pas limitée au seul exemple de réalisation décrit ci-dessus à simple titre indicatif. Ainsi, la disposition de la lame mobile et de la contre-lame fixe pourrait être inversée, la lame mobile étant alors rendue solidaire du poinçon d'enfoncement 12 par des moyens de liaison appropriés, cependant que la contre-lame serait fixée sur une partie fixe de l'extrémité inférieure de la tête de travail.

se trouve située en regard du plan horizontal XY qui correspond au passage prévu pour la mise en place d'un tapis T à l'intérieur de la machine lors de l'opération ultérieure de fixation d'agrafes de jonction. Ainsi, le bord tranchant de cette lame peut venir couper ce tapis lors du relèvement du support 20 de l'enclume.

En regard de cette lame, il est prévu une contre-lame fixe 26 située au-dessus de l'emplacement prévu pour le tapis. Cette contre-lame est fixée sur la partie supérieure 27 de la tête de travail, c'est-à-dire la partie à l'intérieur de laquelle est monté le poinçon d'enfoncement 12.

Comme on peut le constater, la lame 19 et la contre-lame 26 présentent une largeur réduite correspondant à la largeur de deux agrafes de jonction. En conséquence, pour procéder à la coupe du bord du tapis sur toute sa largeur, il convient de déplacer cette tête d'une extrémité à l'autre de la machine, de la même façon que lors de l'opération ultérieure de fixation des agrafes. A cet effet, la tête de travail 6 est équipée d'un cliquet d'avancement 28 coopérant avec une crémaillère fixe 29. Ce mécanisme de commande permet donc de déplacer pas à pas la tête de travail 6 sur toute la largeur de la machine.

Pour effectuer la coupe de l'extrémité du tapis T, il convient donc d'immobiliser celle-ci entre les deux mâchoires de serrage 7 et 8, de façon qu'elle se trouve engagée à l'intérieur de la tête de travail 6. Pour permettre un bon positionnement du tapis, la présente machine comporte avantageusement une règle d'équerrage 30 qui est de préférence escamotable. Lorsque l'extrémité du tapis a été ainsi mise en place, il suffit ensuite de déplacer pas-à-pas la tête de travail sur toute la largeur de la machine et de faire fonctionner celle-ci dans chacune de ses positions d'immobilisation. En effet, lors de chaque opération, le mécanisme de commande assure le relèvement du support mobile de l'enclume 13, ce qui provoque par là-même, l'enfoncement de la lame 19 à l'intérieur du tapis et par suite, la coupe de celui-ci sur toute la largeur de cette lame. Lorsque la tête mobile est parvenue à l'extrémité opposée de la machine, le bord du tapis se trouve donc coupé de façon parfaitement franche et régulière.

On procède alors au retrait momentané de l'extrémité du tapis pour mettre en place une rangée d'agrafes sur le peigne de retenue 9, après quoi l'extrémité du tapis peut être engagée à l'intérieur de Par ailleurs, au lieu de comporter deux outils mobiles, la tête de travail pourrait fort bien n'en posséder qu'un seul, en l'occurrence le poinçon d'enfoncement, l'enclume étant alors pour sa part fixe. Dans un tel cas, la lame de coupe serait évidemment solidarisée avec le poinçon mobile, la contre-lame étant fixée sur l'enclume.

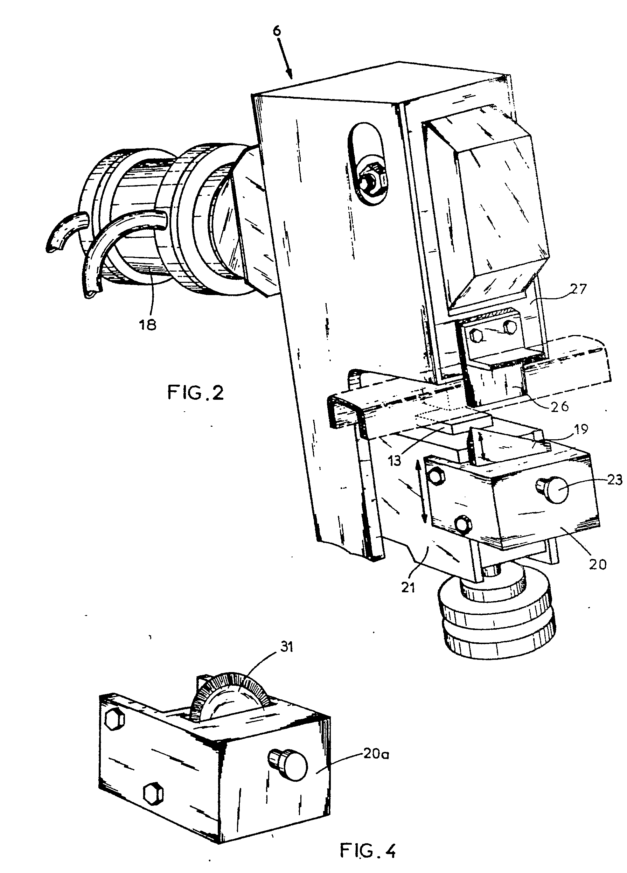

Les figures 5 et 6 représentent une autre forme de réalisation encore de la machine selon l'invention. Celle-ci se différencie de la machine selon les figures 1 à 3 par le fait que la lame de coupe n'est plus située au niveau où s'effectue ultérieurement l'opération de fixation des agrafes. En effet, dans cette nouvelle forme de réalisation, la lame de coupe correspondante 19b est fixée sur le support mobile 21b de l'enclume 13b à un niveau nettement inférieur à celui du plan horizontal XY selon lequel le tapis transversal est disposé lors de l'opération ultérieure de coupe, c'est-à-dire le niveau du peigne fixe 9 déjà décrit précédemment et qui est destiné à recevoir une série d'agrafes de jonction 11 devant être fixées sur le bord d'un tel tapis.

Dans le cas présent, la lame de coupe 19b est disposée au niveau d'un second passage 32 d'introduction d'un tapis T à l'intérieur de la machine, lequel passage est spécialement destiné à permettre l'opération de coupe d'un tel tapis. Ce passage est formé entre une plaque horizontale fixe 33 et une plaque mobile 34 dont la position peut être réglée en fonction de l'épaisseur du tapis correspondant T et ce, grâce à un dispositif de réglage 35. Ainsi, cette plaque réglable permet de maintenir parfaitement en place le tapis lors de l'opération de coupe. Quant à la plaque fixe 33, elle a également pour but de servir de contre-lame, son bord arrière se trouvant situé à proximité immédiate de la lame de coupe 19b.

IL convient de noter que celle-ci est fixée sur le support 21b de l'enclume 13b par l'intermédiaire de deux flasques 36 rapportés sur les joues latérales de ce support qui est creux. Or, la position de fixation de la lame 19b sur les flasques 36 peut être réglée dans le sens de la hauteur pour tenir compte de l'épaisseur variable du tapis T à couper. A cet effet, cette lame porte des tétons 37 engagés dans des lumières 38 des flasques 36, un dispositif de réglage 39 permettant de déterminer à volonté la position de la lame 19b.

Il faut également noter que le passage 32 prévu pour l'introduction du tapis T à l'intérieur de la machine, se trouve situé à un niveau tel qu'il n'existe aucune limitation pour l'engagement de l'extrémité de la machine, contrairement à ce qui est le cas dans la forme de réalisation selon les figures 1 à 3.

En effet, dans cette précédente forme de réalisation, l'introduction du tapis T se trouve limitée par la présence du peigne 9 destiné à recevoir ultérieurement des agrafes 11 de jonction lors de l'opération de fixation de telles agrafes. Par contre, dans la forme de réalisation selon les figures 5 et 6, il n'existe en regard du passage 32, aucun obstacle susceptible de limiter la longueur d'introduction de l'extrémité du tapis T à l'intérieur de la machine.

Mais par ailleurs, la structure de la présente machine est la même que dans la forme de réalisation selon les figures 1 à 3. En effet, le support mobile 21b de l'enclume 13b est actionné par un dispositif de commande qui assure son relèvement pendant l'achèvement de la descente du poinçon d'enfoncement 12 précédemment décrit et qui est représenté à la figure 3 et ce, dans le but d'assurer le rabattement des pointes des crampons de fixation des agrafes de jonction lors d'une telle opération de fixation.

Or, c'est ce mouvement de relèvement du support mobile de l'enclume qui est mis à profit pour assurer la coupe franche de l'extrémité détériorée d'un tapis T avant de procéder à la fixation des agrafes. De même que dans la forme de réalisation précédente, cette coupe préalable de l'extrémité du tapis se trouve réalisée par une succession d'opérations de coupe correspondant à la largeur de la lame 19b, la tête de travail de la machine étant déplacée pas-à-pas sur toute la largeur de celle-ci.

Cependant, en plus du fait qu'il n'existe aucun obstacle à l'introduction de l'extrémité du tapis à l'intérieur de la machine, la forme de réalisation selon les figures 5 et 6 a pour avantage supplémentaire qu'il est inutile d'escamoter la lame de coupe pendant l'opération ultérieure de fixation des agrafes. Cet avantage résulte évidemment du fait que dans le cas présent, la lame 19b se trouve disposée à un niveau différent de celui du niveau XY où s'effectue l'opération ultérieure de fixation des agrafes.

REVENDICATIONS

1. Machine pour la coupe d'un tapis transporteur et la pose d'une rangée d'agrafes de jonction sur le bord d'un tel tapis, comportant une tête de travail, mobile sur toute la largeur de cette machine, pour assurer l'enfoncement des crampons de fixation de ces agrafes au moyen d'un poinçon d'enfoncement et d'une enclume, situés de part et d'autre de l'emplacement du tapis, le premier au moins de ces deux outils de travail étant susceptibles d'être déplacé perpendiculairement au tapis transporteur, sous l'effet d'un mécanisme de commande caractérisée en ce qu'un organe de coupe est fixé sur l'outil mobile de cette machine, ou sur l'un des deux outils mobiles de celle-ci, et une contre-lame fixe est prévue en regard, et en ce que l'agencement est tel que la tête de travail de cette machine soit ainsi capable de couper la bande transporteuse par une série d'opérations de coupe effectuées avant la pose des agrafes et ce, en utilisant le même mécanisme de commande que pour l'opération ultérieure de fixation des agrafes.

2. Machine selon la revendication 1, dont la tête de travail de celle-ci comporte deux organes mobiles perpendiculairement au tapis transporteur, à savoir un poinçon supérieur mobile d'enfoncement des crampons de fixation, et une enclume inférieure relevable permettant de rabattre les pointes des/agrafes sur le tapis transporteur, caractérisée en ce que la lame de coupe est rapportée sur l'enclume mobile en étant disposée de façon à faire saillie sur l'emplacement de passage du tapis lors du relevage de cette enclume, cette lame étant fixée de façon amovible ou escamotable, de façon à pouvoir être neutralisée lors de l'opération ultérieure de fixation des agrafes.

3. Machine selon la revendication 1, dont la tête de travail de celle-ci comporte deux organes mobiles perpendiculairement au tapis transporteur, à savoir un poinçon supérieur mobile d'enfoncement des crampons de fixation, et une enclume inférieure relevable permettant de rabattre les pointes des/agrafes sur le tapis transporteur, caractérisée en ce que la lame de coupe est rapportée sur l'enclume mobile à un niveau différent de celui où s'effectue la fixation ultérieure des agrafes, cette lame étant disposée de façon à faire saillie sur un emplacement de passage du tapis prévu spécialement pour l'opération de coupe et au niveau duquel le tapis peut être engagé dans la machine sur une longueur d'importance quelconque.

4. Machine selon l'une des revendications précédentes, caractérisée en ce qu'en plus du mécanisme de commande apte à assurer le déplacement du ou des organes mobiles de la tête de travail, il est prévu un autre mécanisme d'entraînement susceptible d'assurer le déplacement pas-à-pas de la tête de travail sur toute la largeur de la machine pendant l'opération de coupe du tapis, et éventuellement pendant l'opération ultérieure d'enfoncement des crampons de fixation.

FIG.1

0022007

FIG.2

18

6

27

26

13

19

23

20

21

31

20a

FIG.4

0022007

FIG.3

FIG_5

FIG_6

**Office européen des brevets**

## RAPPORT DE RECHERCHE EUROPEENNE

EP 80 40 0923

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| A | FR - A - 2 355 626 (SOCIETE GORO) | | F 16 G 3/16 |
| A | DE - C - 757 427 (ZILLER, SIKORA) | | B 27 F 7/19 |
| | ---- | | |

**DOMAINES TECHNIQUES RECHERCHES (Int. Cl. 3)**

F 16 G
B 27 F
B 25 C
B 65 G

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

☒ Le présent rapport de recherche a été établi pour toutes les revendications

| Lieu de la recherche | Date d'achèvement de la recherche | Examinateur |
|---|---|---|
| La Haye | 13-08-1980 | JAIK |

OEB Form 1503.1 66.78